# EUROPEAN PATENT APPLICATION

(11) **EP 0 766 000 A2**
(43) Date of publication of application: **02.04.1997**
(21) Application number: 96307014.9
(22) Date of filing: 26.09.1996
(51) Int. Cl.: F02M 27/04, F02B 51/04

(54) **A method and an apparatus for improving quality of the combustion fluid for an internal combustion engine etc.**

(30) Priority: 28.09.1995 JP 274771/95
(71) Applicant: Akira, Hashimoto, Shinagawa-ku, Tokyo (JP)
(72) Inventor: Akira, Hashimoto, Tokyo 140 (JP); Yoshihiro, Miyagawa, Tokorozawa-shi, Saitama 359 (JP)
(74) Representative: Rackham, Stephen Neil

(57) **Abstract**

The present invention is to offer a method and an apparatus for improving quality of the combustion fluid for an internal combustion engine etc., which can surely improve the quality of the combustion fluid and reduce the amount of CO and HC in exhausted gas by means of the formation of a great magnetic field in the inner side of the duct for the combustion fluid-supply and the elongation of the irradiation time of magnetic force for the fluid flowing in the duct.

In addition, more concretely, the present invention is to offer that at least a pair of magnets are closely attrached between the flow of the combustion fluid facing the same magnetic poles of theirs each other like a sandwich and then that, utilizing the repellency of the lines of magnetic force irradiated from the same magnetic poles, the lines of magnetic force flowing the cross direction to the flow of the combustion fluid are led to the before and behind direction of said flow of the combustion fluid, and result in the elongation of the lines of magnetic force along the direction of the flow of the combustion fluid. As a result, the combustion fluid is exposed in the magnetic field for a long time and the clusters of the fluid is divided into smaller clusters by the unbalance of the electric potential of the fluid molecules. These phenomena trigger the increase of the vaporization of the combustion fluid.

## Description

### Background of the Invention

### Field of the Invention

This invention relates to a method and an apparatus for improving quality of the combustion fluid, in other words, for the enhancement of combustion efficiency of the combustion fluid such as fuel or combustion air used for common combustion equipment such as an internal combustion engine, boiler or furnace etc..

### Description of the Prior Art

According to the theory of intermolecular attractive force proposed by van der Waals, a physician in Holland, "hydrocarbon molecules which are fuel, are balanced in electric potential of positive and negative in the usual condition. If the balance is broken by that the molecules are exposed in the strong magnetic field, a cluster of the molecules is divided into very fine ones. This resulted in the very fine condition of fuel and air when they are vaporized."

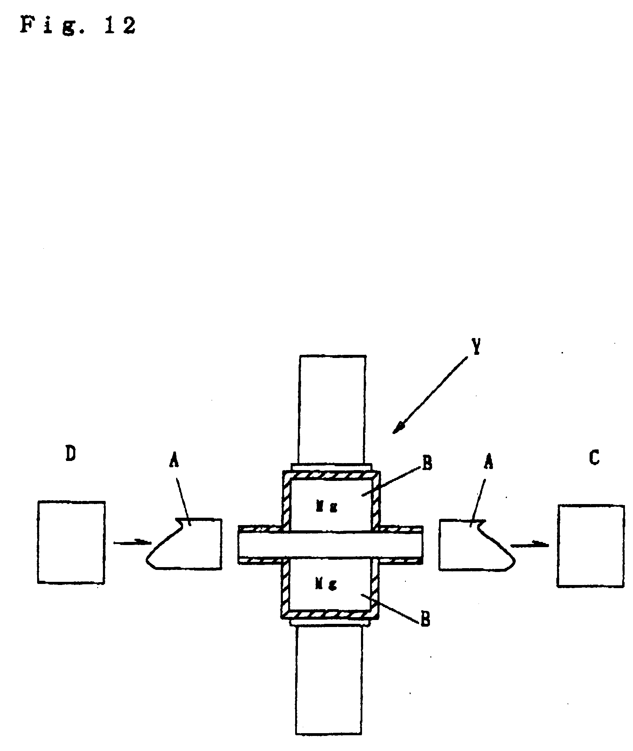

For increasing the combustion efficiency of fuel used for the internal combustion engine or other combustion equipment based on this idea, the following devices have been reported: one is a technique that magnets are introduced in the fuel tank, and the other is an apparatus designated as "Y" as shown in Fig. 12, which is attached at an intermediate of a duct A for fuel-supply from the fuel tank D to a combustion chamber C with a pair of magnets B, each having opposite magnetic poles sandwiched fuel-supplying duct A.

In addition, the techniques for promoting atomization of fuel are proposed as a technique for the division of a molecular cluster of the fuel into fine clusters with lower viscosity of fuel by giving fuel electric stimulation, ultra sonic or far infrared radiation.

However, in the latter case giving fuel electric stimulation, ultra sonic or far infrared radiation, the efficiency of combustion is uncertain because the effect is irregular by the condition and kinds of fuel etc. and because the effect of improving quality is lost. Furthermore, in the latter technique, the efficiency of combustion is also unstable because the effect of improving quality is lost before the fuel is introduced into fuel chamber.

In the former case, if a magnet is thrown into the fuel chamber without any device, atomized fuel cluster is dispersed and the effect of improving quality is reduced during from the tank to the fuel chamber. In the case of attaching a magnet on the duct for fuel-supply, if it is attached after cutting the duct for fuel-supply as shown in Fig. 12, not only the work is complicated, but it easily causes an accident of fuel leaking. If a magnet is attached outside of the duct for fuel-supply, a small and compact apparatus fail to produce a strong magnetic force expected, because not only the material of the duct for fuel-supply and the thick of the duct are in problem, but the fuel is passed only through the flow of the lines of magnetic force produced by a pair of magnets facing different poles, i.e., a positive pole and a negative pole. When a bigger apparatus is used, there are lying the following problems: for example, it costs expensive and fails to put in such a narrow space as the combustion engine of a car.

### Object of the Invention

On the consideration of such problems of conventional techniques, the purpose of the present invention is to offer a method for improving quality of the combustion fluid for an internal combustion engine etc., which can surely improve the quality of the combustion fluid and reduce the amount of CO and HC in exhausted gas by means of the formation of a great magnetic field in the inner side of a duct for fuel-supply or in the inner side of the duct for the combustion fluid-supply and the elongation of the irradiation time of magnetic force for the fluid flowing in the duct.

In addition, the purpose of the present invention is to offer an apparatus for improving quality of the combustion of fluid for an internal combustion engine etc., which is compact and b able to produce a strong magnetic field in the duct for the combustion fluid-supply.

### Summary of the Invention

The present invention is characterized by that it has the effect of the reduction of the cluster size and the increase of the vaporization of the combustion fluid by means of passing the combustion fluid through the magnetic field of the present invention and deteriorating the balance of electric potential of the clusters of the combustion fluid.

More concretely, at least a pair of magnets are closely attached between the flow of the combustion fluid facing the same magnetic poles of theirs each other like a sandwich. Then, utilizing the repellency of the lines of magnetic force irradiated from the same magnetic poles, the lines of magnetic force flowing the cross direction to the flow of the combustion fluid are led to the b8efore and behind direction of said flow of the combustion fluid, and result in the elongation of the lines of magnetic force along the direction of the flow of the combustion fluid.

For example, when said magnets are attached between the right side and left side of the flow of the combustion fluid, the lines of magnetic force which are flowing at least one-way among the flow of magnetic force upward and downward along the flow of the combustion fluid are led to the before and behind direction to the flow of the combustion fluid.

The characteristics of the method related to the present invention is to form the magnetic field greatly elongating back and force along the flow of the combustion fluid, compared with the magnetic forces which are produced by the magnets closely attached between the flow of the combustion fluid facing the different magnetic poles of theirs each other like a sandwich or by the magnets attached between the flow of the combustion fluid with no consideration of their distance, even if they are facing the same magnetic poles of theirs each other like a sandwich.

Therefore, the combustion fluid can be irradiated by the magnetic force for a long time and the efficiency of the combustion is increased because of the increase of the vaporization of the combustion fluid.

One of the characteristics of the present invention is to lead the flow of the combustion fluid along the lines of magnetic force and repelling against them which are produced by the utilization of the repelling lines of magnetic force, though the flow of the combustion fluid is proposed preferably to flow to the cross direction to magnetic force in conventional discrimination.

An apparatus related to the present invention is composed
of a connecting frame which is made of a magnetic substance and processed rough "U" shape,
of a pair of permanent magnets fixed on the ends of said connecting frame, on which these magnets are faced at the same magnetic pole,
and of the mounting members for the fixation of both of said magnets on the outer side of the ducts for fuel- or combustion fluid-supply which joints between the combustion room and the fuel tank.

Therefore, the apparatus related to the present invention can form the magnetic field in which the lines of magnetic force produced by the magnets attached at the ends of the said connecting frame are repelling each other. Since the inner surface of the connecting frame is magnetized to the same magnetic pole as the magnetic pole of these magnets, the lines of magnetic force which elongate to the direction toward the inner surface from said magnets are led to the before and behind direction of the flow of said fluid locating outside of the connecting frame, repelling against the lines of magnetic force irradiated from the inner surface of the connecting frame. As a result, there is formed a magnetic field elongating to the before and behind direction of the flow of the combustion fluid

### Brief Description of the Drawings

Fig. 1 shows the perspective of a part of the apparatus on an embodiment related to the present invention.

Fig. 2 shows a chart of the attachment position of the apparatus shown in Fig. 1.

Fig. 3 shows the front view of the typical lines of magnetic force irradiated from the apparatus shown In Fig. 1.

Fig. 4 shows the ichnography of the typical lines of magnetic force irradiated from the apparatus shown in Fig. 1.

Fig. 5 and 6 respectively show the front view and the ichnography of the typical lines of magnetic force irradiated from magnets which are lack of the connecting frame and are facing at the same magnetic pole of theirs each other.

Fig. 7 to Fig. 9 shows typical lines of magnetic force irradiated from the magnets which are facing at the different magnetic poles . Fig. 7 shows the front view of typical lines of magnetic force irradiated from the magnets without the connecting frame. Fig. 8 shows the ichnography of typical lines of magnetic force irradiated from the magnets with the connecting frame. Fig.9 shows the front view of the apparatus shown in Fig. 8.

Fig. 10 and 11 respectively show the drawings of the present invention based on the another embodiment.

Fig. 12 shows the cross section of one of the conventional apparatus.

### Embodiment

Hereinafter, a detailed description of the present invention will be made in accordance with the embodiment accompanied by illustrated drawings.

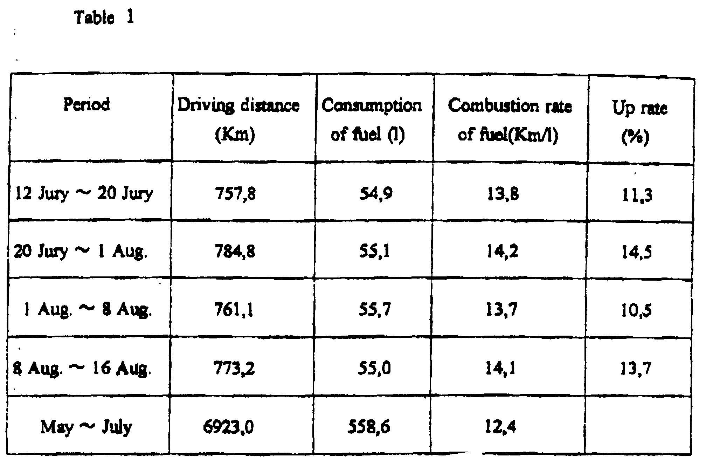

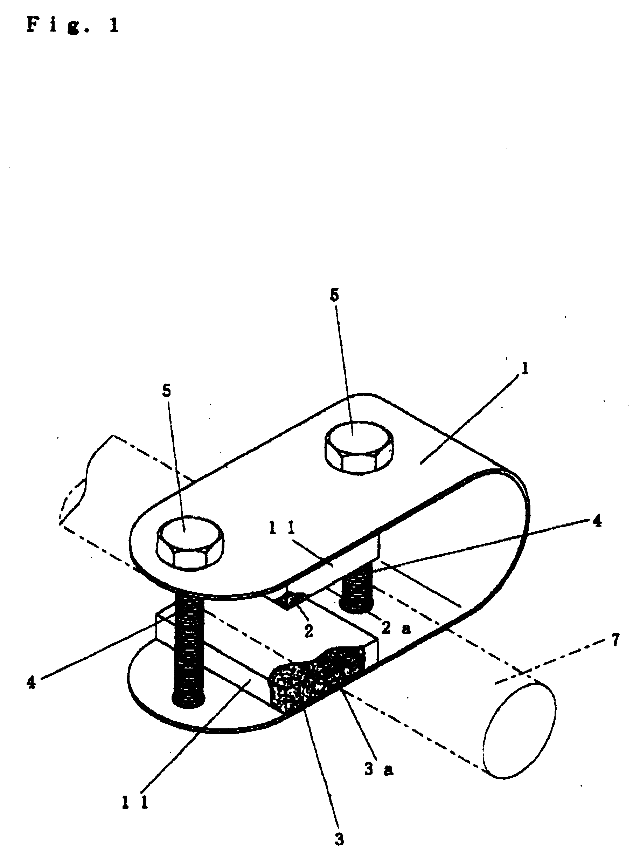

Fig. 1 shows the perspective of a part of the apparatus on an embodiment related to the present invention.

The numeral 1 in the drawing designates the connecting frame which is made of steal and is a curved plate of rough "U" shape in the cross section, and the ends of the frame has a proper distance. This distance d is decided considering the thick of magnets 2,3 and outer diameter etc. of the fuel pipe 7 as will be mentioned later.

Magnets 2 and 3 are permanent magnets fixed on the each end of the connecting frame 1.

These magnets, for example, are samarium cobalt magnets having magnetic flux density of 1,000 gaus, whose facing surfaces 2a and 3a are the same magnetic poles ( both positive or both negative ). Surfaces 2a, 3a and 2b,3b on the opposite side of the facing surfaces 2a, 3a are intimately fixed at the inner surfaces at the ends of the connecting frame 1. Covering surface other than the intimately fixed surfaces of the magnets 2 and 3 is covered with a thin silicon-rubber cover pat 11.

The numeral 4 designates a mounting bolt for fixing the apparatus around the fuel pipe 7. The numeral 5 is a nut screwed to a mounting bolt inserted through a port 6 provided on the leading edge of the connecting frame 1 and screw up the ends of the connecting frame. Another set of the mounting bolt-nut 4 and 5 is also disposed at the inner side of the connecting frame 1 with the magnets 2 and 3 sandwiched between the said set and the magnets 2 and 3. Both mounting bolt-nut 4 and 5 are made of non-magnetic substance.

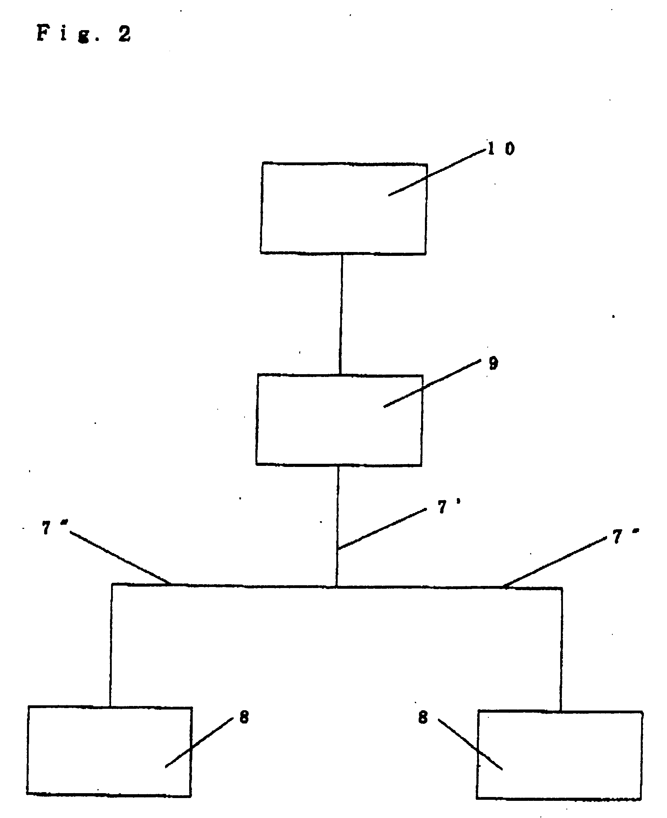

Fig. 2 shows a mounting position of the apparatus on an engine with multicylinders. Fuel supplied from a fuel tank 10 to a fuel-supplying main duct 7' by a fuel pump is pumped through separated ducts 7" to a carburetor 8 of the cylinder for the combustion. The present apparatus is advantageously provided at each of the fuel separated duct 7" adjacent to the carburetor, i.e., at every cylinder in the case of multicylinders.
Otherwise, the present apparatus can be attached only on the main duct 7' provided between the fuel pump 9 and the carburetor 8.

The attachment of the present invention is carried out by sandwiching with the magnets 2a and 3a, and by screwing the front-back bolt-nut 4 and 5. Since the silicon-rubber cover pat 11 covers on the surfaces of the magnets in contact with the fuel pipe, the fuel pipe is protected from damage and fixed said magnets firmly. In addition, in the embodiment of the present invention, the use of samarium cobalt magnet having a high Curie point (of 750 degree and co-efficient of temperature of 0.03% / degree ) as the magnet prevents loss of magnetic property even in the engine room at high temperature.

Furthermore, the addition of ajurite to the cover pat 11 results in dividing the fuel cluster into fine clusters, because electromagnetic wave affect to the fuel in the fuel pipe. The ajurite powder is 1 ∼ 3 µ in the partide size and the preferable amount of the addition is 3 ∼ 5% of all the amount of the component of the cover-pat. More than 5% of the addition deteriorates the interconnection of the silicon-rubber.

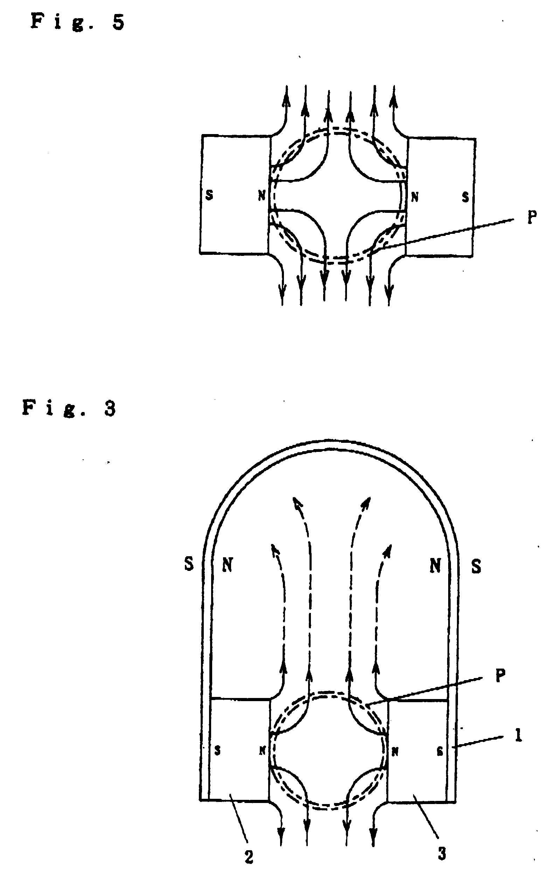

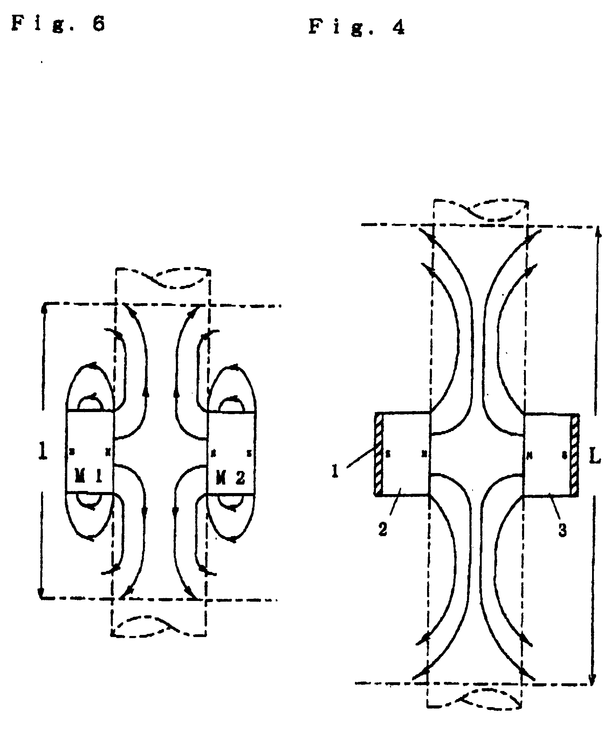

Fig. 3 and 4 show the typical lines of magnetic force irradiated from the apparatus of the present invention.

Fig. 5 and 6 show the typical lines of magnetic force irradiated from a pair of magnets M1 and M2 which are lack of the connecting frame and are facing at the same magnetic pole (Pole N and Pole N).

Fig. 5 shows the front view of the magnets M1 and M2. Fig. 6 shows the ichnography of the magnets M1 and M2. The lines of magnetic force irradiated from the magnets M1 and M2 are repelling each other and result in the formation of the magnetic field with 3 dimensional flow of the lines of magnetic force. In Fig. 5, when the duct P for the fluid is between the magnets M1 and M2, a part of the lines of magnetic force is divided upward and downward to the duct P repelling each other. In Fig. 6, a part of the lines of magnetic force is divided back and forth along the duct P, i.e., back and forth to the flow of the combustion fluid in the duct P.

In the case of Fig. 3 and 4, the basal lines of magnetic force irradiated from the magnets M1 and M2 attached to the present invention are the same as those in Fig. 5 and 6. However, the present invention has a connecting frame. The inner surface of the connecting frame is magnetized pole N in Fig. 3 ( see in Fig. 5 in the case of no connecting frame ) . Therefore, the lines of magnetic force irradiated upward in the figure are led along the outside of the connecting frame, i.e., along the flow of the combustion fluid in the duct, because the lines of magnetic force is repelled by the same magnetic pole formed on the inner surface of the connecting frame. As a result, as shown in Fig. 4 exhibiting the lines of magnetic force in the ichnography, a greatly long magnetic field is formed along the duct . In said figure, the length of said magnetic field is shown as numeral L, compared with showing that with no connecting frame in Fig. 6 as numeral 1. Therefore, in Fig. 4, when the fluid flows downward in the figure, the fluid at first passes through between the magnets confronting the flow of the lines of magnetic force, and then goes down along the flow of the lines of magnetic force. In other words, the fluid is exposed in the magnetic field for a long time in Fig. 4, which divides the clusters in the fluid into fine clusters and results in the increase of the efficiency of the combustion in the combustion chamber.

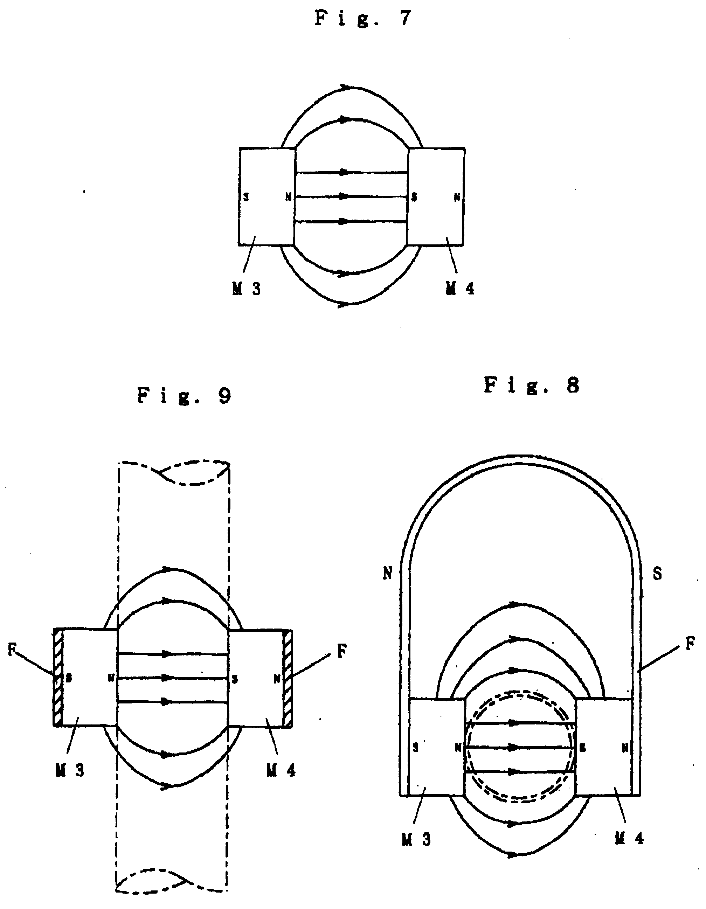

For the comparison, there are shown the typical pattern of the lines of magnetic force produced by all the configuration of the magnets described until now from Fig. 7 to Fig. 9. In these cases, even if a connecting frame is attached, the lines of magnetic force upward in Fig.8 is absorbed to the magnetic pole of the magnet on the opposite side and is not elongated along the duct shown in Fig. 9.

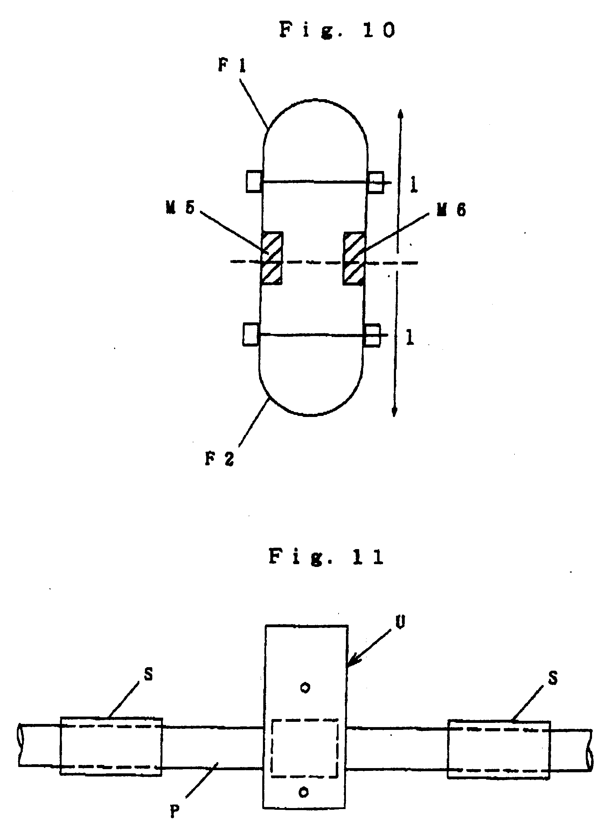

Fig. 10 shows a plenary figure related to another embodiment of the present invention.

In the embodiment, the connecting frame is attached upward and downward to the magnets M5 and M6, which are facing each other. According to the embodiment, the lines of magnetic force irradiated downward in the figure can be led along the flow of the fluid in the duct like the lines of magnetic force going upward in Fig. 3 and elongated longer than those showing in the embodiments of Fig. 3 and 4.

In the present Invention, said length of the magnetic field can be adjusted by the adjustment of the height of the connecting frame. In addition, as shown in Fig. 11, the length of the magnetic field can also be adjusted by approaching sleeves S1 and S2 which are made of magnetic substance and cover the duct for combustion fluid-supply to the apparatus shown in the embodiments of Fig. 3 and 4

On the other hand, in the embodiments described until now, though a magnetic substance is used as the connecting frame, in the case of the working of the present invention, the change of the direction of the magnetic field and the formation of elongated magnetic field can be realized out by the attachment of magnets or magnetic substance, which are facing at the same magnetic pole, on the inner surface of the connecting frame which is made of non-magnetic substance.

Hereinafter, there are shown some results when the apparatus of the present invention is attached to a vehicle.

### Test 1

The test of exhausted gas for a vehicle at EPA in the State of Virginia, USA

Following shows the results of the measurement of the exhausted gas of an old mobile ( a passenger car, old car, 6 cylinders, driving distance 83,174 ) of 1986-Model based of ARTICLE 40 of Federal Regulations, CHAPTER85, Additional Rules W carried out on July 8,1995.

Before the attachment of the present invention ( Number of Certification 4,378,925 )

| | | |
|---|---|---|
| Carbon monoxide ( % ) | 0.23 | Pass ( Standard value 1.20 ) |
| Hydrocarbon ( ppm ) | 280 | Fail ( Standard value 220 ) |

After the attachment of the present invention ( Number of Certification 4,378,927 )

| | | |
|---|---|---|
| Carbon monoxide ( % ) | 0.00 | Pass ( Standard value 1.20 ) |
| Hydrocarbon ( ppm ) | 5 | Pass ( Standard value 220 ) |

As shown clearly by the certification, though the present invention was only attached to one of six cylinders, the value of the measurement of carbon monoxide decreased from 0.23% before the attachment of the present invention to the limiting value after the attachment of it. The concentration of hydrocarbon extraordinarily decreased at the level of 1/56.

As shown by the number of the certification, only one other car was tested between the tests of the car before the attachment of the present invention and after the attachment of it. This result shows that the second test as for the present invention was carried out after a very short interval of the first test. Therefore, the present invention proved to have a great effect for the improvement of the quality of fuel for a very short time.

### Test 2

### Test of the Cost of Fuel for Driving and the Smoke Test of Exhausted Gas of Diesel Engine Vehicle

The cost of fuel for driving and smoke were tested about TOYOTA HIGH ACE in 1992( Model: U-LH113V, 3L, 4 CYLINDERS ENGINE, 2.77 LITERS, NOX REGULATION CLEARED ). The apparatus in the embodiment of the present invention was attached to each fuel pipe adjacent to each fuel injection nozzles of said vehicle.

### 1. Test of the Cost of Fuel for Driving

Period: July 11, 1995 to August 16, 1995
- Driving Area:: This vehicle was driven from Ogose-Cho, Chichibu City, Saitama
Prefecture to Tokorozawa City ( one way trip of about 35 km ), around
several sites of construction in Tokorozawa City with 2 to 4 workers on board.
- Results of the Test:: The results was shown in Table 1.

The comparison data were selected from mean value of driving from May 1 to July 10, 1995 of the said vehicle. Both of the comparison data and test data were ones without using air conditioner of the vehicle. The oil-supply was made after the warning light switched on.

The results shown in Table 1 shows ensured contribution of the present apparatus to the efficiency of combustion. In addition, ① an increase in torque at low speed eased starting off. ② improved acceleration provides light feeling and ③ the driving distance is extended in spite of driving in the usual manner according to the drivers who carried out the test.

### 2. Smoke test

The amount of smoke produced at idling in completely warmed condition ( the amount of the smoke for 30 seconds from the start) and at snapping ( the amount of smoke at the time of full acceleration 10 seconds later from start and suspension 2 seconds later ) were roughly measured by spraying the exhausted gas on a test piece set on the tail pipe. The test piece was band-made folded cloth whose fibers were fused into a sheet of about 1 mm in thickness. The test was carried out at a regular interval and resulted in the following.

### At the time of idling of hot engine

Basically, there was no reduction of the amount of the produced smoke. But large soot ( 0.2 ∼ 0.4 ) were attached on said cloth when the idle smoke was produced after driving 650 km from the beginning of the test. At that time, the produced smoke was slightly more. Then it returned to its original amount and no change was observed thereafter. The produced smoke of the testing vehicle was assumed to be at a lower level than before.

### At the time of snapping of hot engine

A little reduction of the amount of soot was observed from the point of 650 km driving after beginning of the test. At that time, the same size of large soot as that of soot observed in the test at the time of said idling were observed. However, smaller size of soot were observed in further driving. These results suggests that the apparatus of the present invention is assumed to contribute to the reduction of the amount of the produced smoke.

## Claims

1. In a method for improving quality of the combustion fluid such as fuel or combustion air used for an internal-combustion engine etc., which can increase the efficiency of combustion by means of the improvement of the vaporization of the combustion fluid which can be achieved by making magnetic force working the combustion fluid used for an internal combustion engine etc., because magnetic force can deteriorate the balance of electric potential of the clusters of the fluid molecules and divide them into very fine molecular clusters,
a method for improving quality or the combustion fluid used for an internal-combustion engine etc. characterized by that
at least a pair of magnets are closely attached between the flow of the combustion fluid facing the same magnetic poles of theirs each other like a sandwich,
utilizing the repellency of the lines of magnetic force irradiated from the same magnetic poles, the lines of magnetic force flowing the cross direction to the flow of the combustion fluid are led to the before and behind direction of said flow of the combustion fluid, and result in the elongation of the lines of magnetic force along the direction of the flow of the combustion fluid.

2. A method for improving quality of the combustion fluid used for an internal-combustion engine etc. claimed in Claim 1 characterized by that
the lines of magnetic force which are flowing at least one-way among the flow of magnetic force upward and downward along the flow of the combustion fluid are led to the before and behind direction to the flow of the combustion fluid by the attachment of said magnets between the right side and left side of the flow of the combustion fluid, utilizing the repellency of the lines of magnetic force.

3. A method for improving quality of the combustion fluid used for an internal-combustion engine etc. claimed in Claim 1 characterized by that
said magnet is a permanent magnet.

4. A method for improving quality of the combustion fluid used for an internal-combustion engine etc. claimed in Claim 1 characterized by that
said magnet is an electromagnet.

5. In an apparatus for improving quality of the combustion fluid such as fuel or combustion air used for an internal-combustion engine etc., which can increase the effidency of combustion by means of the improvement of the vaporization of the combustion fluid which can be achieved by making magnetic force working the combustion fluid used for an internal combustion engine etc., because magnetic force can deteriorate the balance of electric potential of the clusters of the fluid molecules and divide them into very fine molecular clusters,
an apparatus for improving quality of the combustion fluid used for an internal-combustion engine etc. composed of
a connecting frame which is made of a magnetic substance whose ends are at a proper distance by curving it,
and of a pair of permanent magnets fixed on the ends of said connecting frame, on which these magnets are faced at the same pole,
and of the mounting members for the fixation of both of said magnets on the outer side of the duct for fuel- or combustion air-supply which joints between the combustion chamber and the fuel tank.

6. In an apparatus for improving quality of the combustion fluid such as fuel or combustion air used for an internal-combustion engine etc, which can increase the efficiency of combustion by means of the improvement of the vaporization of the combustion fluid which can be achieved by making magnetic force working the combustion fluid used for an internal combustion engine etc., because magnetic force can deteriorate the balance of electric potential of the clusters of the fluid molecules and divide them into very fine molecular clusters,
an apparatus for improving quality of the combustion fluid used for an internal-combustion engine etc. composed of
a connecting frame which is made of a magnetic substance whose ends are at a proper distance by curving it,
and of a pair of permanent magnets fixed on the ends of said connecting frame, on which these magnets are faced at the same pole,
and of the second connecting frame with a curved shape which is made of the same magnetic substance as that of the first connecting frame, which is attached at the opposite side of the first connecting frame when said pair of permanent magnets are the border between the first and second connecting frames,
and of the mounting members for the fixation of both of said magnets on the outer side of the duct for fuel- or combustion air-supply which joints between the combustion chamber and the fuel tank.

7. An apparatus for improving quality of the combustion fluid used for an internal-combustion engine etc. claimed in Claim 5 or Claim 6 characterized by that the connecting frame is curved in rough "U" shape and attaches permanent magnets on both ends.

8. An apparatus for improving quality of the combustion fluid used for an internal-combustion engine etc. claimed in Claim 5 or Claim 6 characterized by that said mounting members are a bolt and a nut made of non-magnetic substance, which pierce from one end of the said connecting frame to the other's and fasten the connecting frame.

9. An apparatus for improving quality of the combustion fluid used for an internal-combustion engine etc. claimed in Claim 5 or Claim 6 characterized by that said permanent magnet is preferably samalium cobalt magnet.

10. An apparatus for improving quality of the combustion fluid used for an internal-combustion engine etc. claimed in Claim 5 and Claim 6 characterized by that the surface of said permanent magnets facing the opposite permanent magnet each other are preferably mounted by silicon rubber.
